# EUROPÄISCHE PATENTSCHRIFT

(11) **EP 2 513 497 B1**
(45) Veröffentlichungstag und Bekanntmachung des Hinweises auf die Patenterteilung: **26.10.2016**
(21) Anmeldenummer: 10803369.7
(22) Anmeldetag: 01.12.2010
(51) Int. Cl.: F16B 13/06, F16B 13/08

(54) **BEFESTIGUNGSELEMENT**
FASTENING ELEMENT
ÉLÉMENT DE FIXATION

(30) Priorität: 16.12.2009 DE 102009059158; 29.10.2010 DE 102010060259; 24.11.2010 DE 102010060771
(43) Veröffentlichungstag der Anmeldung: 24.10.2012
(73) Patentinhaber: fischerwerke GmbH & Co. KG, 72178 Waldachtal (DE)
(72) Erfinder: BOHNET, Hartmut, 72178 Waldachtal (DE); KAUPP, Jochen, 72178 Waldachtal (DE); UNTERWEGER, Roland, 72285 Pfalzgrafenweiler (DE); SCHMIEDER, Paul, 72160 Horb a. N. (DE)
(86) Internationale Anmeldenummer: PCT/EP2010/007291
(87) Internationale Veröffentlichungsnummer: WO 2011/072805

(56) Entgegenhaltungen:
- WO-A1-99/02869
- DE-A1- 3 031 048
- DE-A1- 4 011 229
- DE-U1- 29 501 182
- US-B1- 6 309 155

## Beschreibung

Die Erfindung betrifft ein Befestigungselement mit den Merkmalen des Oberbegriffs des Anspruchs 1.

Ein derartiges Befestigungselement ist aus der US 6 309 155 B1 bekannt. Ein weiteres Befestigungselement zur Verankerung in einem hinterschnittenen Bohrloch ist aus der Offenlegungsschrift DE 40 11 229 A1 bekannt. Das in dieser Schrift dargestellte Befestigungselement ist insbesondere dazu geeignet, plattenartige Bauelemente, beispielsweise Naturwerksteinplatten, an einer lastabtragenden Konstruktion zu befestigen. Das Befestigungselement ist als Hinterschnittanker ausgebildet und weist einen Schaftabschnitt und ein Spreizelement auf. An dem Schaftabschnitt ist an seinem einbringseitig vorderen Ende ein konischer Spreizkörper angeordnet, mit dem das ring- beziehungsweise hülsenförmige Spreizelement aufspreizbar ist. Der Schaftabschnitt weist zudem an einem hinteren Teil ein Lastangriffsmittel auf. Das Spreizelement wird von einem hülsenartigen metallischen Ring gebildet, der dachförmig in der Form eines Pultdachs oder aber mit mehreren dachförmig gebogenen Abschnitten ausgebildet ist.

Am Schaftabschnitt des Befestigungselements ist zudem eine Spreizhülse angeordnet. Wird die Spreizhülse in Richtung des konischen Spreizkörpers in axialer Richtung entlang des Schaftabschnitts bewegt, so drückt die Spreizhülse das Spreizelement über den konischen, sich in Einbringrichtung erweiternden Spreizkörper, wodurch der Ring derart aufgespreizt wird, dass er den Hinterschnitt des hinterschnittenen Bohrlochs zumindest teilweise ausfüllt. Durch das Aufspreizen des Spreizkörpers wird das Befestigungselement formschlüssig im Bohrloch verankert. Somit lassen sich über das Befestigungselement Kräfte von dem plattenartigen Bauelement auf die lastabtragende Konstruktion übertragen, mit der das Befestigungselement über das als Außengewinde ausgebildete Lastangriffsmittel verbunden ist.

Aufgabe der Erfindung ist, ein alternatives Befestigungselement zu schaffen.

Diese Aufgabe wird erfindungsgemäß durch ein Befestigungselement mit den Merkmalen des Anspruchs 1 gelöst. Das erfindungsgemäße Befestigungselement zur Verankerung in einem hinterschnittenen Bohrloch umfasst einen Schaftabschnitt und ein Spreizelement. Der Schaftabschnitt weist einen Spreizkörper zum Spreizen des Spreizelements sowie ein Lastangriffsmittel auf. Der Spreizkörper ist insbesondere als konischer Abschnitt ausgebildet, der sich in Einbringrichtung erweitert und der an dem einbringseitig vorderen Ende des Schaftabschnitts angeordnet ist. Das Lastangriffsmittel ist beispielsweise als Außengewinde ausgebildet. Das Spreizelement ist hülsenförmig, wobei "hülsenförmig" bedeutet, dass das Spreizelement den Schaftabschnitt in Umfangsrichtung im Wesentlichen umschließt. Insbesondere ist das Spreizelement in Umfangsrichtung geschlossen. Mit "Einbringrichtung" bzw. "einbringseitig" ist die Richtung bzw. die Seite gemeint, in die bzw. mit der das Befestigungselement in ein Bohrloch eingeführt wird.

Kennzeichnend für das erfindungsgemäße Befestigungselement ist die spezielle Ausbildung des Spreizelements. Das Spreizelement weist einen ringförmigen Grundkörper auf, an dem einbringseitig mindestens ein Spreizlappen angeordnet ist. Der ringförmige Grundkörper ist insbesondere am in Einbringrichtung hinteren Ende des Spreizelements angeordnet. Vorzugsweise ist der ringförmige Grundkörper in sich geschlossen. Mit "Spreizlappen" ist ein Element gemeint, das beim Aufspreizen des Spreizelements radial nach außen, vom ringförmigen Grundkörper weg, bewegt wird. Befindet sich das Befestigungselement in einem hinterschnittenen Bohrloch und wird das Spreizelement, beispielsweise mittels einer Spreizhülse, gegen den Spreizkörper gedrückt, so bewegt sich der Spreizlappen durch den sich konisch erweiternden Spreizkörper derart radial nach außen, dass der Spreizlappen in den Hinterschnitt eingreift und diesen zumindest teilweise ausfüllt. Der Spreizlappen weist eine Öffnung in Form einer allseits umschlossenen Durchbrechung auf, die insbesondere derart angeordnet ist, dass sie den Querschnitt des Spreizlappens im Bereich seiner Anbindung an den ringförmigen Grundkörper reduziert. Dabei liegt die Öffnung innerhalb des Spreizlappens, so dass beim Verspreizen des Spreizlappens die Öffnung im Wesentlichen mit dem Spreizlappen nach außen bewegt wird. Die Öffnung kann insbesondere an einem dem Grundkörper zugewandten Bereich des Spreizlappens angeordnet sein, so dass die Öffnung vom Spreizlappen und vom Grundkörper umschlossen ist. Hierdurch wird am Spreizlappen eine definierte, scharnierartige Biegestelle mit reduziertem Querschnitt geschaffen, an der der Spreizlappen leicht zu biegen ist. Das Spreizelement lässt sich daher sehr leicht aufspreizen, so dass nur eine geringe axiale Kraft notwendig ist, um das Spreizelement im Bohrloch in den Hinterschnitt hinein zu spreizen. Hierdurch lässt sich das erfindungsgemäße Befestigungselement auch in sehr dünnen Bauelementen einsetzen, ohne dass durch das Aufspreizen des Spreizelements das Bauelement zerstört wird. Der übrige Teil des Spreizlappens kann daher massiv ausgestaltet werden, so dass er die Hinterschneidung möglichst vollständig und flächig ausfüllt und der Spreizlappen selbst in sich so stabil ist, dass über das Spreizelement große Kräfte von einem zu befestigenden Bauelement in eine lastabtragende Konstruktion übertragen werden können.

Erfindungsgemäß ist die Öffnung derart gestaltet, dass sie den Spreizlappen in einem wesentlichen Teil seiner Fläche durchdringt, so dass der Spreizlappen nur aus einer ringartigen Wandung besteht, die zwei Stege und einen in Einbringrichtung vorderen Eingriffsbereich umfasst. Die Wandung ist insbesondere dünn, was bedeutet, dass ihre Dicke im Verhältnis zur Größe der Öffnung gering ist. Bei einer entsprechend großen Öffnung wird die Materialdicke der Wandung so gering, dass der Spreizlappen relativ leicht in sich verformt werden kann. Insbesondere beim Setzen des Befestigungselements in engen Bohrlöchern führt die Verformbarkeit der ringartigen Wandung des Spreizlappens zu einer Reduktion des durch das Spreizelement auf die Bohrlochwand ausgeübten Drucks. Stößt der Spreizlappen mit seinem freien Ende, dem Eingriffsbereich, gegen die Bohrlochwand, so wird die Wandung des Spreizlappens gestaucht und verformt, wodurch sich das Befestigungselement im Vergleich zu einem Befestigungselement mit einem Spreizlappen mit nur einer kleinen Öffnung einfacher setzen lässt. Für die Verformbarkeit ist insbesondere vorteilhaft, wenn die Stege der Wandung, die den ringförmigen Grundkörper mit dem vorderen, das freie Ende bildenden Eingriffsbereich der Wandung verbinden, möglichst schlank und somit leicht stauchbar ausgeführt sind. Die Schlankheit der Stege, die über das Verhältnis ihrer Länge zu ihrer Breite definiert ist, liegt vorzugsweise in der Größenordnung von 1 bis 4, vorzugsweise zwischen 1,5 und 3,0.

Erfindungsgemäß ist der Eingriffsbereich, der die Stege an ihrem vorderen, dem ringförmigen Grundkörper abgewandten Ende miteinander verbindet, im Wesentlichen bogenförmig ausgestaltet. "Bogenförmig" kann in diesem Zusammenhang insbesondere bedeuten, dass der Eingriffsbereich Teil eines Kreisrings ist, also eine Fläche aufweist, die zwischen zwei konzentrischen Kreisen eingeschlossen ist. "Bogenförmig" beschreibt jede Art der Verbindung, die dazu führt, dass der Eingriffsbereich durch eine Art Gewölbe stabil ausgebildet ist. Trifft der gewölbeartige Eingriffsbereich auf die Bohrlochwand, so wird er sich leicht verformen, insbesondere wird aber die auf den Eingriffsbereich wirkende Druckkraft über die Gewölbewirkung auf die Stege abgeleitet, die ausknicken beziehungsweise gestaucht werden, wodurch der auf die Bohrlochwand ausgeübte Druck verringert ist. Insbesondere bei schlanken Stegen, die relativ leicht und unter einer definierten Kraft ausknicken beziehungsweise gestaucht werden, kommt es so zu einer definierten Verformung des Spreizlappens, so dass das Bauelement gegen eine Zerstörung durch Druck beim Setzen des Befestigungselements geschützt ist.

Bei einer bevorzugten Ausgestaltungsform des erfindungsgemäßen Befestigungselements ist der Spreizlappen derart gestaltet, dass sich der Spreizlappen in Richtung seines freien Endes verjüngt. Dies hat den Vorteil, dass der Spreizlappen beim Auftreffen auf die Bohrlochwand leichter verformt werden kann. Weist der Spreizlappen beispielsweise Stege auf, so sind diese auf Grund der Verjüngung gegenüber der Bohrlochwand geneigt. Trifft das freie Ende des Spreizlappens auf die Bohrlochwand, so wird in die Stege auf Grund der Neigung nicht nur eine Druckkraft sondern auch ein Biegemoment eingeleitet, wodurch die Stege schon unter einer geringeren Druckkraft verformt werden. Hierdurch werden Spannungen reduziert, die durch das Setzen des Befestigungselements in der Bohrlochwand entstehen, wenn der Spreizlappen gegen den Bohrlochgrund gedrückt wird. Besonders vorteilhaft für die Verformbarkeit ist es, wenn sich auch die Öffnung in Richtung des freien Endes des Spreizlappens verjüngt, insbesondere wenn die Verjüngung der Öffnung mit der des Spreizlappens korrespondiert. Hierdurch können beispielsweise die Stege relativ schlank ausgeführt werden.

In einer weiteren bevorzugten Ausgestaltungsform des erfindungsgemäßen Befestigungselements ist am Schaftabschnitt, vorzugsweise am Spreizkörper des Schaftabschnitts, ein erster Teil einer Verdrehsicherung angeordnet. Dieser erste Teil der Verdrehsicherung ist insbesondere in Form einer nasenartigen Erhöhung ausgebildet. Die nasenartigen Erhöhung korrespondiert mit dem aufgespreizten Spreizelement derart, dass eine Verdrehung des aufgespreizten Spreizelements relativ zum Schaftabschnitt und in dessen Umfangsrichtung nicht möglich ist. Ist das Befestigungselement in einem hinterschnittenen Bohrloch verspreizt, so verhindert die Reibung zwischen Bohrlochwand und aufgespreiztem Spreizelement ein Verdrehen des Spreizelements relativ zum Bohrloch, und der erste Teil der Verdrehsicherung verhindert ein Verdrehen des Schaftabschnitts gegenüber dem Spreizelement und somit auch gegenüber dem Bohrloch beziehungsweise dem Bauelement. Somit kann beispielsweise eine Mutter auf ein als Außengewinde ausgeführtes Lastangriffsmittel problemlos aufgeschraubt werden, beispielsweise um das Befestigungselement an einer lastabtragenden Konstruktion zu befestigen, ohne dass das Befestigungselement sich beim Aufschrauben der Mutter mitdreht. Beispielsweise kann am ringförmigen Grundkörper des Spreizelements eine ringförmige Nut ausgebildet sein, die mit der nasenartigen Erhöhung korrespondiert. Um die Reibung zwischen dem Spreizelement und der Bohrlochwand zu erhöhen, kann am Spreizelement ein Rauheitselement angeordnet sein. Das Rauheitselement ist beispielsweise ein nasen- oder zahnartiger Vorsprung, eine Rändelung oder eine nutartige Vertiefung.

Vorzugsweise ist die Öffnung des Spreizlappens derart ausgebildet, dass sie mit dem ersten Teil der Verdrehsicherung korrespondiert und mit diesem die Verdrehsicherung bildet. Der erste Teil der Verdrehsicherung, beispielsweise die nasenartigen Erhöhung, rastet in die Öffnung des Spreizlappens ein, die in diesem Fall den zweiten Teil der Verdrehsicherung bildet, und sichert den Schaftabschnitt durch eine formschlüssige Verbindung mit dem Spreizelement gegen eine Verdrehung in Umfangsrichtung. Die Öffnung erfüllt in diesem Fall eine Doppelfunktion: Sie ermöglicht ein leichtes Aufspreizen des Spreizelements und gegebenenfalls eine Verformung des Spreizlappens und bildet zudem den zweiten Teil der Verdrehsicherung. Als zweiter Teil der Verdrehsicherung ist somit am Spreizelement kein zusätzliches Bauteil notwendig.

In einer bevorzugten Ausgestaltungsform des erfindungsgemäßen Befestigungselements sind an dem Grundkörper des Spreizelements mindestens zwei Spreizlappen angeordnet, die in Umfangsrichtung durch eine Ausnehmung voneinander getrennt sind. Die Anordnung von mehreren Spreizlappen am ringförmigen Grundkörper ermöglicht, dass die Geometrie der Spreizlappen optimal auf die Geometrie der Hinterschneidung des Bohrlochs abgestimmt und die Öffnung derart ausgebildet werden kann, dass eine optimale Kraftübertragung und ein Aufspreizen des Spreizelements mit geringen Axialenkräften möglich ist. Insbesondere kann durch die Anordnung mehrerer Spreizlappen, die über den Umfang am ringförmigen Grundkörper verteilt angeordnet sind, die für kreisförmig ausgebildete Bohrungen notwendige Krümmung der Spreizlappen in Umfangsrichtung auf ein Minimum reduziert werden. Ist ein Spreizlappen stark in Umfangsrichtung gekrümmt, so behindert dies ein leichtes Aufspreizen des Spreizelements, da der Spreizlappen beim Aufspreizen in sich gebogen werden muss. Vorzugsweise ist die Ausnehmung zwischen den mindestens zwei Spreizlappen derart gestaltet, dass die Ausnehmung mit dem ersten Teil der Verdrehsicherung korrespondiert. Die Ausnehmung bildet in diesem Fall alternativ den zweiten Teil der Verdrehsicherung. Vorteilhaft ist insbesondere die Ausbildung von zwei unterschiedlichen und alternativen zweiten Teilen der Verdrehsicherung. So kann an einem oder an mehren Spreizlappen eine Öffnung vorgesehen sein und zwischen den Spreizlappen können sich Ausnehmungen befinden. So ist sichergestellt, dass der erste Teil der Verdrehsicherung schon nach einer geringen Drehung des Schaftabschnitts in Umfangsrichtung mit einem zweiten Teil der Verdrehsicherung in Kontakt kommt, der mit dem ersten Teil korrespondiert und mit diesem gemeinsam die Verdrehsicherung bildet.

In einer weiteren bevorzugten Ausgestaltungsform des erfindungsgemäßen Befestigungselements ist an dem ringförmigen Grundkörper des Spreizelements ein radial nach innen gerichteter Anschlagbund angeordnet. Dieser gewährleistet einen definierten Anschlagpunkt des Spreizelements am Spreizkörper des Schaftabschnitts. Vorzugsweise ist an dem Spreizkörper eine zum Anschlagbund korrespondierende Anschlagschulter ausgebildet. Die Anschlagschulter wirkt mit dem Anschlagbund als Anschlagelement und begrenzt eine axiale Relativverschiebung zwischen dem Spreizelement und dem Spreizkörper. Das Anschlagelement verhindert somit, dass das Spreizelement durch axiale Kräfte zu weit in das Bohrloch und/oder in die Hinterschneidung hineingedrückt wird, wodurch schädliche Spannungen im Bereich der Bohrlochwand entstehen, die das Bauteil schädigen können.

Vorzugsweise ist das Spreizelement des erfindungsgemäßen Befestigungselements ein Stanzteil, insbesondere ein Stanzbiegeteil, das aus Metall hergestellt ist. Dies ermöglicht eine einfache und kostengünstige Herstellung des Spreizelements und des erfindungsgemäßen Befestigungselements.

Die Erfindung wird nachfolgend anhand eines in den Zeichnungen dargestellten Ausführungsbeispiels näher erläutert.

Es zeigen:
- Figur 1: ein erfindungsgemäßes Befestigungselement in einem unverspreizten Zustand in einer Ansicht;
- Figur 2: eine Schnittdarstellung der Figur 1;
- Figur 3: das erfindungsgemäße Befestigungselement in einem ersten verspreizten Zustand in einer perspektivischen Ansicht;
- Figur 4: das erfindungsgemäße Befestigungselement in einem zweiten verspreizten Zustand in einer perspektivischen Ansicht;
- Figur 5: das Spreizelement als Stanzteil in einem nicht-gebogenen Zustand in einer perspektivischen Ansicht; und
- Figur 6: ein Spreizlappen des Stanzteils der Figur 5 in einer Draufsicht.

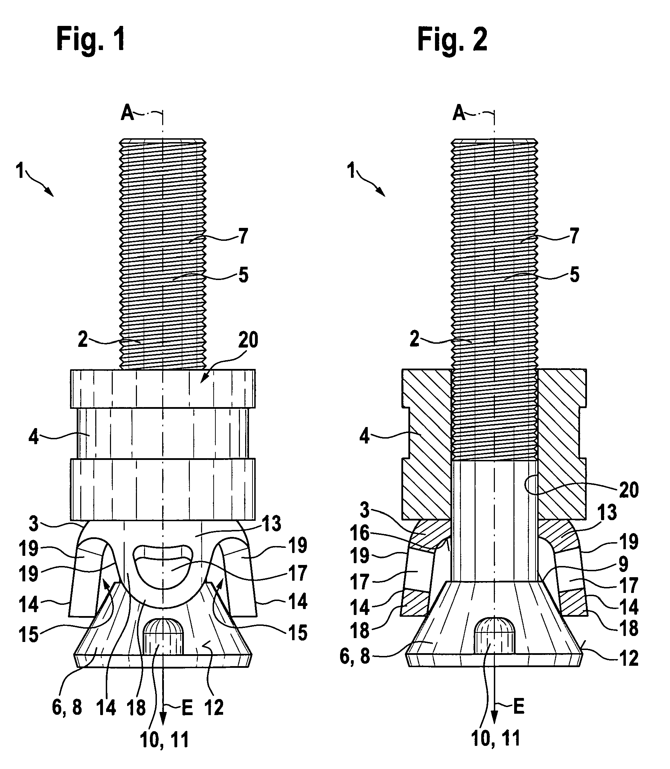

In den Figuren 1 und 2 ist ein erfindungsgemäßes Befestigungselement 1 in einem unverspreizten Zustand dargestellt, so wie es in Richtung der Einbringrichtung E in ein nicht dargestelltes Bohrloch mit Hinterschneidung einführbar ist. Die Einbringrichtung E ist parallel zur Längsachse A des Befestigungselements 1. Das Befestigungselement 1 ist als Hinterschnittanker zur Verankerung in einem nicht dargestellten hinterschnittenen Bohrloch ausgebildet. Das Befestigungselement 1 besteht aus einem Schaftabschnitt 2, einem Spreizelement 3 und einer Spreizhülse 4.

Der Schaftabschnitt 2 ist ein Konusbolzen mit einem zylindrischen Abschnitt 5 und einem sich einbringseitig daran anschließenden konischen Abschnitt 6, der das vordere Ende des Schaftabschnitts 2 bildet. Der zylindrische Abschnitt 5 weist ein Lastangriffsmittel 7 in Form eines Außengewindes auf. Das Lastangriffsmittel 7 dient beispielsweise zum Befestigen des Befestigungselements 1 an einer ebenfalls nicht dargestellten lastabtragenden Konstruktion. Der konische Abschnitt 6 bildet einen Spreizkörper 8, dessen Durchmesser in Einbringrichtung E zunimmt. Durch den Spreizkörper 8 wird das Spreizelement 3 gespreizt, wenn es in Richtung der Einbringrichtung E auf den konischen Abschnitt 6 geschoben wird. Am Übergang zwischen dem zylindrischen Abschnitt 5 und dem konischen Abschnitt 6 weist der konische Abschnitt 6 einen Durchmesser auf, der größer als der Durchmesser des zylindrischen Abschnitts 5 ist, wodurch eine den zylindrischen Abschnitt 5 radial überragende Kreisringsfläche entsteht, die eine Anschlagschulter 9 bildet. Am einbringseitig vorderen Teil des konischen Abschnitts 6 ist eine nasenartigen Erhöhung 10 als erster Teil 11 einer Verdrehsicherung angeordnet. Die nasenartigen Erhöhung 10 steht wulstartig in radialer Richtung, also normal zur Längsachse A, über die Mantelfläche 12 des kegelartigen konischen Abschnitts 6 über.

Das Spreizelement 3 weist an seinem hinteren Ende einen ringförmigen Grundkörper 13 auf, der den zylindrischen Abschnitt 5 des Schaftabschnitts 2 als geschlossene Hülse ringförmig umfasst. An dem Grundkörper 13 sind einbringseitig vier Spreizlappen 14 angeordnet, die durch Ausnehmungen 15 in Umfangsrichtung voneinander beabstandet sind. An dem ringförmigen Grundkörper 13 ist an seinem hinteren Ende ein radial nach innen gerichteter Anschlagbund 16 ausgebildet, der zusammen mit der Anschlagschulter 9 des Schaftabschnitts 2 als Anschlagelement wirkt. Die Spreizlappen 14 weisen jeweils eine Öffnung 17 in Form einer allseits umschlossenen Durchbrechung auf, die ungefähr mittig im jeweiligen Spreizlappen 14 angeordnet ist. Durch die Öffnung 17 entsteht am Spreizlappen 14 eine ringartige Wandung 21 mit einem vorderen Eingriffsbereich 18 zum Eingriff in die nicht dargestellte Hinterschneidung eines ebenfalls nicht dargestellten Bohrlochs, und mit zwei Stegen 22, die mit je einer scharnierartigen Biegestelle 19 den Eingriffsbereich 18 und den Grundkörper 13 miteinander verbinden. Auf Grund der Öffnung 17 sind die scharnierartigen Biegestellen 19 derart ausgebildet, dass sie leicht zu biegen sind. Somit reicht eine relativ geringe, in Richtung der Einbringrichtung E gerichtete axiale Last aus, um den Spreizlappen 14, mit der Öffnung 17 und der Wandung 21, durch ein Aufschieben des Spreizelements 3 auf den konischen Abschnitt 6 des Schaftabschnitts 2, radial nach außen zu spreizen. Der Eingriffsbereich 18 ist so massiv und stabil ausgebildet, dass über ihn große Kräfte zwischen einer Bohrlochwand und dem Befestigungselement 1 übertragen werden können.

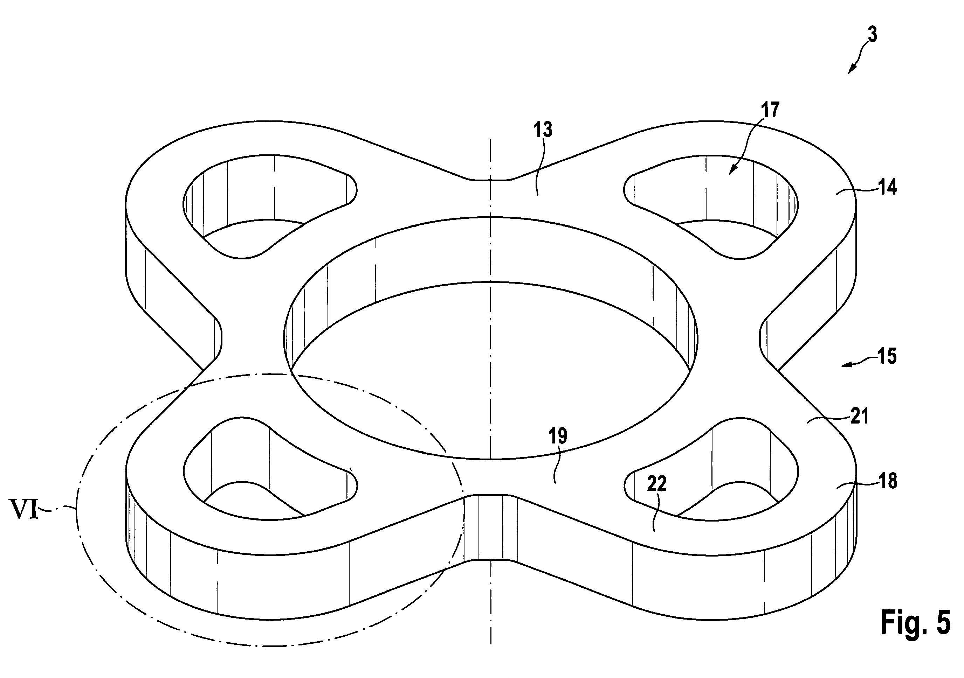

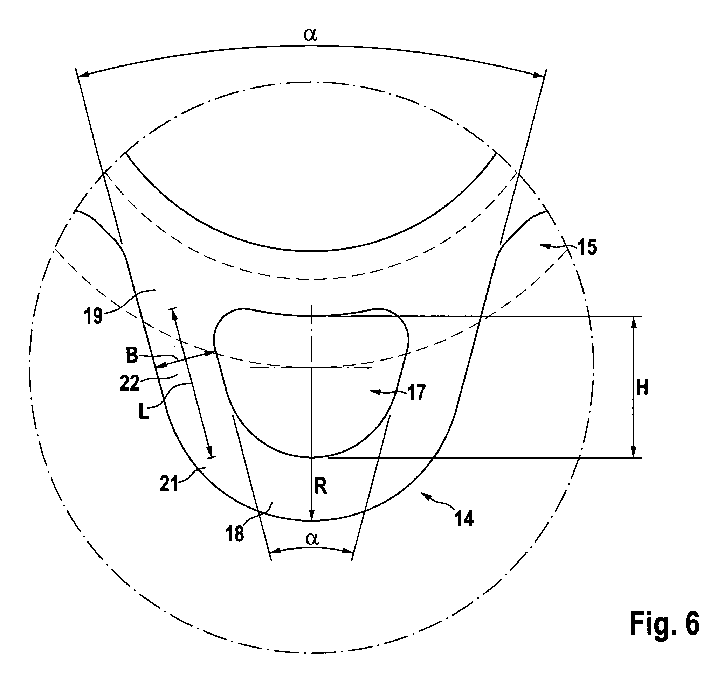

Aufgrund der relativ großen Öffnung 17, die einen wesentlichen Teil der Fläche der Spreizlappen 14 umfasst, ist die Wandung 21 relativ dünn und somit leicht verformbar. Die Wandung 21 ist ringförmig mit Stegen 22, die durch den bogenförmigen Eingriffsbereich 18 miteinander verbunden sind. Die Stege 22 sind relativ schlank, was in den Figuren 5 und 6 gut erkennbar ist. Die Schlankheit der Stege 22 begünstigt ihre Stauchbarkeit. Durch die bogenförmige Ausbildung des Eingriffsbereichs 18 wird eine Druckkraft, die beim Auftreffen des vorderen Endes des Spreizlappen 14 auf eine Bohrlochwand auf den Eingriffsbereich 18 wirkt, über den Eingriffsbereich 18 auf die Stege 22 abgeleitet. In den Stegen wirkt eine Druckkraft und durch den Abstand in Umfangsrichtung zwischen dem Eingriffsbereich 18 und den Stegen 22 sowie durch die Neigung der Stege 22 wirkt in den Stegen 22 zusätzlich ein Biegemoment. Auf Grund der bogenförmigen Ausbildung des Eingriffsbereichs 18, der als Teil eines Kreisrings mit einem äußeren Radius R ausgeführt ist, wirkt der Eingriffsbereich 18 als Gewölbe, das relativ stabil ist. Unter Wirkung der Druckkraft wird sich der Eingriffsbereich 18 etwas verformen, die Druckkraft wird aber hauptsächlich auf die Stege 22 abgeleitet, die sich auf Grund ihrer schlanken Ausbildung unter einer relativ geringen und relativ genau definierbaren Last verformen. Dies hat den Vorteil, dass durch die Spreizlappen 14 keine großen, in Richtung der Längsachse A wirkenden Kräfte auf das Bohrloch übertragen werden, wie sie beispielsweise beim Aufspreizen des Spreizelements 3 entstehen können.

Sowohl der Spreizlappen 14 als auch die Öffnung 17 verjüngen sich in Richtung des freien Endes des Spreizlappens 14, bei dem in den Figuren 5 und 6 dargestellten nicht-gebogenen Stanzteil also in radialer Richtung, hin zum Eingriffsbereich 18. Der Spitzenwinkel α der Verjüngungen beträgt 30°, wobei im Allgemeinen ein Winkel zwischen 20° und 40° bevorzugt ist. Dabei bleibt eine Breite B der Stege 22 im Wesentlichen konstant. Die Länge L der Stege 22 kann in diesem Fall vereinfacht mit der Höhe H der Öffnung 17 in radialer Richtung gleichgesetzt werden, so dass die Schlankheit der Stege 22, also das Verhältnis der Höhe H zur Breite B, ungefähr 2,2 beträgt. Hierdurch wird die Verformbarkeit des Spreizlappens 14 begünstigt. Durch die Verjüngung ist der kreisringförmige Eingriffsbereich 18 relativ klein und stabil, wohingegen die Stege 22 relativ lang sind. Unter Wirkung einer Druckkraft wird der als Gewölbe wirkende Eingriffsbereich 18 daher die Druckkraft direkt auf die Stege 22 ableiten und in den Stegen 22 ein zusätzliches Biegemoment erzeugen. Die Stege 22 sind leicht stauchbar sind und sich verformen sich definiert. Das erfindungsgemäße Befestigungselement 1 lässt sich daher auch in sehr dünnen Bauelementen einsetzen, ohne dass durch das Aufspreizen des Spreizelements 1 das Bauelement zerstört wird.

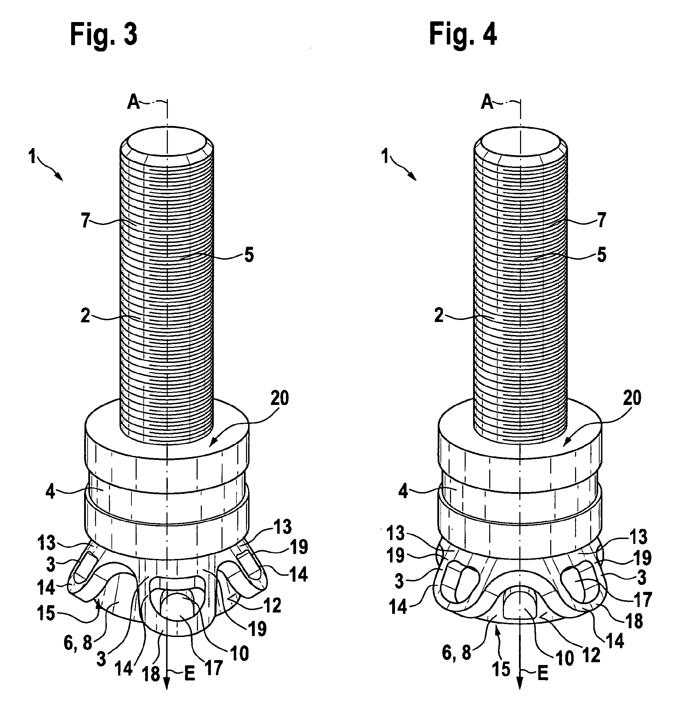

Die Spreizhülse 4 ist als hohlzylindrischer Körper ausgebildet. Dabei weist der als zylindrische Bohrung 20 ausgebildete Hohlraum einen Innendurchmesser auf, der im Wesentlichen dem Außendurchmesser des zylindrischen Abschnitts 5 des Schaftabschnitts 2 entspricht. Wird die Spreizhülse 4 durch eine axiale Kraft, die beispielsweise durch ein nicht dargestelltes Einschlaggerät aufgebracht wird, in Richtung der Einbringrichtung E verschoben, so drückt die Spreizhülse 4 das Spreizelement 3 so lange über den Spreizkörper 8, bis der Anschlagbund 16 auf die Anschlagschulter 9 des Schaftabschnitts 2 trifft. Selbst eine Erhöhung der axialen Kraft kann dann das Spreizelement 3 nicht weiter in Richtung der Einbringrichtung E bewegen. Eine zu große Verspreizung des Spreizelements 3 ist somit ausgeschlossen. Durch das Aufschieben des Spreizelements 3 auf den Spreizkörper 8 werden die Spreizlappen 14 radial nach außen verspreizt und dabei im Bereich der scharnierartigen Biegestellen 19 gebogen. Der verspreizte Zustand ist in den Figuren 3 und 4 dargestellt.

Damit bei einem in ein Bohrloch gesetztes und verspreiztes Befestigungselement 1 eine nicht dargestellte Mutter auf das als Außengewinde ausgestaltete Lastangriffsmittel 7 aufgeschraubt werden kann, ohne dass das Befestigungselement 1 sich im Bohrloch mitdreht, weist das Befestigungselement 1 eine Verdrehsicherung auf. Als erster Teil 11 der Verdrehsicherung dient die nasenartigen Erhöhung 10 am konischen Abschnitt 6 des Spreizkörpers 8. Den zweiten Teil der Verdrehsicherung bildet entweder, wie in Figur 3 dargestellt, die Öffnung 17, die derart gestaltet ist, dass sie mit der nasenartigen Erhöhung 10 korrespondiert, so dass die Öffnung 17 und die nasenartigen Erhöhung 10 im verspreizten Zustand formschlüssig miteinander in Eingriff bringbar sind, oder die Ausnehmung 15 wirkt zwischen zwei Spreizlappen 14 als zweiter Teil der Verdrehsicherung, wie dies in Figur 4 dargestellt ist. Hierzu ist die Ausnehmung 15 derart gestaltet, dass sie im verspreizten Zustand mit der nasenartigen Erhöhung 10 ebenfalls formschlüssig in Eingriff bringbar ist. Wird das Befestigungselement 1 in einem Bohrloch verspreizt, so rastet die nasenartige Erhöhung 10 nach dem Verspreizen entweder in die Öffnung 17 oder in die Ausnehmung 15 ein. Je nach Ausrichtung des Spreizelements 3 zum Schaftabschnitt 2 ist eine geringfügige Drehbewegung in Umfangsrichtung des Befestigungselements 1 notwendig, bis der erste Teil 11 der Verdrehsicherung in den zweiten Teil der Verdrehsicherung einrastet. Nach dem Einrasten überträgt die Verdrehsicherung ein durch eine Mutter aufgebrachtes Drehmoment über das gespreizte Spreizelement 3 durch Reibschluss auf die nicht dargestellte Bohrlochwand. Ein Mitdrehen des Befestigungselements 1 im Bohrloch wird hierdurch sicher verhindert.

Das Spreizelement 3 des Befestigungselements 1 ist als Stanzbiegeteil aus Metall gefertigt. Der Schaftabschnitt 2 besteht ebenfalls aus Metall und ist durch Kaltmassivumformung kostengünstig hergestellt. Die Spreizhülse 4 besteht dagegen aus einem faserverstärkten Kunststoff und ist im Spritzgussverfahren hergestellt. Das erfindungsgemäße Befestigungselement 1 ist daher kostengünstig herstellbar und auf Grund seiner Ausgestaltung leistungsfähig und leicht zu montieren.

### Bezugszeichenliste

### Befestigungselement

- 1: Befestigungselement
- 2: Schaftabschnitt
- 3: Spreizelement
- 4: Spreizhülse
- 5: zylindrische Abschnitt
- 6: konischer Abschnitt
- 7: Lastangriffsmittel
- 8: Spreizkörper
- 9: Anschlagschulter
- 10: nasenartige Erhöhung
- 11: erster Teil einer Verdrehsicherung
- 12: Mantelfläche
- 13: Grundkörper
- 14: Spreizlappen
- 15: Ausnehmung
- 16: Anschlagbund
- 17: Öffnung
- 18: Eingriffsbereich
- 19: scharnierartige Biegestelle
- 20: Bohrung
- 21: Wandung
- 22: Steg
- E: Einbringrichtung
- A: Längsachse
- R: äußerer Radius des Eingriffsbereichs 18
- B: Breite des Stegs 22
- L: Länge des Stegs 22
- H: Höhe der Öffnung 17
- α: Spitzenwinkel

## Patentansprüche

1. Befestigungselement (1) zur Verankerung in einem hinterschnittenen Bohrloch,
- mit einem Schaftabschnitt (2) und einem Spreizelement (3),
- wobei an dem Schaftabschnitt (2) ein Spreizkörper (8) zum Spreizen des Spreizelements (3) und ein Lastangriffsmittel (7) angeordnet ist,
- wobei das Spreizelement (3) hülsenförmig ausgebildet ist, und einen ringförmigen Grundkörper (13) aufweist, an dem einbringseitig ein Spreizlappen (14) angeordnet ist, der eine Öffnung (17) aufweist,
**dadurch gekennzeichnet,**
**dass** der Spreizlappen (14) aus einer ringartigen Wandung (21) besteht, die zwei Stege (22) und einen Eingriffsbereich (18) umfasst, der im Wesentlichen bogenförmig ausgestaltet ist.

2. Befestigungselement nach Anspruch 1, **dadurch gekennzeichnet, dass** der Spreizlappen (14) sich in Richtung seines freien Endes verjüngt.

3. Befestigungselement nach Anspruch 1 oder 2, **dadurch gekennzeichnet, dass** die Öffnung (17) sich in Richtung des freien Endes des Spreizlappens (14) verjüngt.

4. Befestigungselement nach einem der Ansprüche 1 bis 3, **dadurch gekennzeichnet, dass** an dem Schaftabschnitt (2) ein erster Teil (11) einer Verdrehsicherung, insbesondere in der Form einer nasenartigen Erhöhung (10), angeordnet ist.

5. Befestigungselement nach Anspruch 4, **dadurch gekennzeichnet, dass** die Öffnung (17) des Spreizlappens (14) derart ausgebildet ist, dass sie mit dem ersten Teil (11) der Verdrehsicherung korrespondiert und mit diesem die Verdrehsicherung bildet.

6. Befestigungselement nach Anspruch 4 oder 5, **dadurch gekennzeichnet, dass** an dem Grundkörper (13) mindestens zwei Spreizlappen (14) angeordnet sind, die in Umfangsrichtung durch eine Ausnehmung (15) voneinander getrennt sind.

7. Befestigungselement nach Anspruch 6, **dadurch gekennzeichnet, dass** die Ausnehmung (15) derart gestaltet ist, dass die Ausnehmung (15) mit dem ersten Teil (11) der Verdrehsicherung korrespondiert und mit diesem die Verdrehsicherung bildet.

8. Befestigungselement nach einem der Ansprüche 1 bis 7, **dadurch gekennzeichnet, dass** an dem ringförmigen Grundkörper (13) ein radial nach innen gerichteter Anschlagbund (16) angeordnet ist.

9. Befestigungselement nach Anspruch 8, **dadurch gekennzeichnet, dass** an dem Spreizkörper (8) eine Anschlagschulter (9) ausgebildet ist, die mit dem Anschlagbund (16) als Anschlagelement zur Begrenzung einer axialen Relativbewegung zwischen dem Spreizelement (3) und dem Spreizkörper (8) wirkt.

10. Befestigungselement nach einem der Ansprüche 1 bis 9, **dadurch gekennzeichnet, dass** das Spreizelement (3) ein Stanzteil, insbesondere ein Stanzbiegeteil ist.

11. Befestigungselement nach einem der Ansprüche 1 bis 10, **dadurch gekennzeichnet, dass** der ringförmige Grundkörper (13) in sich geschlossen ist.

## Claims

1. Fixing element (1) for anchoring in an undercut drilled hole,
- having a shank portion (2) and an expansion element (3),
- there being arranged on the shank portion (2) an expander body (8) for expanding the expansion element (3) and a load-application means (7),
- the expansion element (3) being sleeve-like and having a ring-shaped main body (13) at the introduction end of which there is arranged an expansion lobe (14) having an opening (17),
**characterised in that**
the expansion lobe (14) consists of a ring-like wall (21) comprising two ribs (22) and an engagement region (18) which is of substantially arcuate form.

2. Fixing element according to claim 1, **characterised in that** the expansion lobe (14) tapers towards its free end.

3. Fixing element according to claim 1 or 2, **characterised in that** the opening (17) tapers towards the free end of the expansion lobe (14).

4. Fixing element according to any one of claims 1 to 3, **characterised in that** on the shank portion (2) there is arranged a first part (11) of an anti-rotation device, especially in the form of a lug-like protuberance (10).

5. Fixing element according to claim 4, **characterised in that** the opening (17) in the expansion lobe (14) is formed in such a way that it is complementary to the first part (11) of the anti-rotation device and together therewith forms the anti-rotation device.

6. Fixing element according to claim 4 or 5, **characterised in that** on the main body (13) there are arranged at least two expansion lobes (14) which are separated from one another in the circumferential direction by a recess (15).

7. Fixing element according to claim 6, **characterised in that** the recess (15) is configured in such a way that the recess (15) is complementary to the first part (11) of the anti-rotation device and together therewith forms the anti-rotation device.

8. Fixing element according to any one of claims 1 to 7, **characterised in that** on the ring-shaped main body (13) there is arranged a radially inwardly directed stop collar (16).

9. Fixing element according to claim 8, **characterised in that** on the expander body (8) there is formed a stop shoulder (9) which, together with the stop collar (16), acts as a stop element for limiting axial relative movement between the expansion element (3) and the expander body (8).

10. Fixing element according to any one of claims 1 to 9, **characterised in that** the expansion element (3) is a stamped component, especially a stamped and bent component.

11. Fixing element according to any one of claims 1 to 10, **characterised in that** the ring-shaped main body (13) is itself closed.

## Revendications

1. Elément de fixation (1) destiné à l'ancrage dans un trou foré contre-dépouillé,
- comprenant un tronçon (2) formant tige et un élément expansible (3),
- un moyen (7) d'application de charges, et un corps d'écartement (8) conçu pour déployer ledit élément expansible (3), étant disposés sur ledit tronçon (2) formant tige,
- ledit élément expansible (3) étant réalisé en forme de douille, et étant muni d'un corps annulaire de base (13) sur lequel se trouve, côté insertion, une patte déployable (14) pourvue d'un orifice (17),
**caractérisé par le fait**
**que** la patte déployable (14) est constituée d'une paroi (21) de type annulaire, influant deux membrures (22) et une zone (18) offrant prise et présentant, pour l'essentiel, une configuration en arc de cercle.

2. Elément de fixation selon la revendication 1, **caractérisé par le fait que** la patte déployable (14) s'amenuise en direction de son extrémité libre.

3. Elément de fixation selon la revendication 1 ou 2, **caractérisé par le fait que** l'orifice (17) se rétrécit en direction de l'extrémité libre de la patte déployable (14).

4. Elément de fixation selon l'une des revendications 1 à 3, **caractérisé par le fait qu'**une première partie (11) d'un système de verrouillage antirotation, revêtant notamment la forme d'une protubérance (10) du type mentonnet, est disposée sur le tronçon (2) formant tige.

5. Elément de fixation selon la revendication 4, **caractérisé par le fait que** l'orifice (17) de la patte déployable (14) est réalisé de façon telle qu'il coïncide avec la première partie (11) du système de verrouillage antirotation et forme, avec cette dernière, ledit système de verrouillage antirotation.

6. Elément de fixation selon la revendication 4 ou 5, **caractérisé par le fait qu'**au moins deux pattes déployables (14), séparées l'une de l'autre par un évidement (15) dans la direction périphérique, sont situées sur le corps de base (13).

7. Elément de fixation selon la revendication 6, **caractérisé par le fait que** l'évidement (15) est configuré de telle sorte que ledit évidemment (15) coïncide avec la première partie (11) du système de verrouillage antirotation et forme, avec cette dernière, ledit système de verrouillage antirotation.

8. Elément de fixation selon l'une des revendications 1 à 7, **caractérisé par le fait qu'**une collerette de butée (16), dirigée vers l'intérieur dans le sens radial, est disposée sur le corps annulaire de base (13).

9. Elément de fixation selon la revendication 8, **caractérisé par le fait qu'**un épaulement de butée (9) façonné sur le corps d'écartement (8) agit avec la collerette de butée (16), en tant qu'élément de butée, afin de limiter un mouvement relatif axial entre l'élément expansible (3) et ledit corps d'écartement (8).

10. Elément de fixation selon l'une des revendications 1 à 9, **caractérisé par le fait que** l'élément expansible (3) est une pièce découpée, notamment une pièce venue de découpage et de pliage.

11. Elément de fixation selon l'une des revendications 1 à 10, **caractérisé par le fait que** le corps annulaire de base (13) est par lui-même fermé.
